# EUROPEAN PATENT SPECIFICATION

(11) **EP 1 345 507 B1**
(45) Date of publication and mention of the grant of the patent: **17.01.2007**
(21) Application number: 01988072.3
(22) Date of filing: 21.12.2001
(51) Int. Cl.: A43B 13/04, B29D 31/51

(54) **PROCESS FOR MANUFACTURING A SOLE FOR SHOES COMPOSED OF A TREAD SOLE MADE OF VULCANIZED RUBBER MATED WITH A POLYURETHANE MID-SOLE**
VERFAHREN ZUR HERSTELLUNG EINER SCHUHSOHLE AUS EINER PROFILSOHLE AUS VULKANISIERTEM KAUTSCHUK, VERBUNDEN MIT EINER ZWISCHENSOHLE AUS POLYURETHAN
PROCEDE DE FABRICATION D'UNE SEMELLE DE CHAUSSURE CONSTITUEE D'UNE SEMELLE A LAMELLES EN CAOUTCHOUC VULCANISE ASSOCIEE A UNE SEMELLE INTERCALAIRE EN POLYURETHANNE

(30) Priority: 28.12.2000 IT PD20000295
(43) Date of publication of application: 24.09.2003
(73) Proprietor: Main Group S.p.A., 35129 Padova (IT)
(72) Inventor: LORENZIN, Lorenzo, I-35031 Abano Terme (IT)
(74) Representative: Modiano, Micaela Nadia
(86) International application number: PCT/EP2001/015284
(87) International publication number: WO 2002/052971

(56) References cited:
- EP-A- 0 270 047
- DE-A- 3 616 874
- FR-A- 1 546 866
- US-A- 5 946 755
- US-A1- 2001 004 653

## Description

### Technical Field

The present invention relates to a process for manufacturing a sole for shoes composed of a tread sole made of vulcanized rubber mated with a polyurethane mid-sole.

### Background Art

The present invention also relates to the use of a particular mixture for the vulcanizable rubber, which is suitable to mate very firmly to the polyurethane.

The problems encountered in coupling vulcanized rubber and polyurethane are known from the background art.

The two materials, at least the ones used up to now, are substantially mutually incompatible and in order to associate them the vulcanized rubber must be cold-treated with a primer that makes it ready to receive the poured or injected polyurethane.

This entails, in the production of shoe soles or of shoes, the need to provide tread soles made of vulcanized rubber with a prepared surface, which must then be placed in the molds into which the polyurethane will be injected or poured.

Instead of treatment with a primer, other solutions have been adopted which entail placing a felt between the vulcanized rubber and the polyurethane, and this felt must be compatible with both materials.

With these problems, it is evident that the vulcanized rubber tread sole cannot be prepared in the same production cycle as the sole or shoe but must be prepared beforehand and separately, allowed to cool, and then subjected to a surface treatment, or it is necessary to use an accessory component.

The production of shoes with a vulcanized rubber tread and a polyurethane mid-sole is therefore scarcely convenient and excessively expensive.

On the other hand, the advantages of a sole with a tread made of vulcanized rubber and the remaining part (mid-sole) made of polyurethane would be considerable, since a vulcanized rubber tread is highly resistant to wear and thermal abrasion and a polyurethane mid-sole is very light and comfortable.

DE 3616874 relates to improve the adhesion strength between the layer of rubber material and the layer of foamed materials which are commonly used for the manufacture of two-layer soles for shoes. The solution provided in said document resides in a specific sequence of steps and in carrying out the vulcanization of the outsole concurrently with the foaming of the intermediate sole. This sequence of steps is identified as the key point that leads to create a chemical connection which guarantees an optimum adhesion of the outsole on the intermediate sole. No mention is made in D 1 either to the presence of a sole bottom piston in the mold, to the use of any specific rubber mixture, or that such mixture can have a positive effect on the adhesion strength between rubber and polyurethane, irrespective of the particular vulcanization process adopted.

EP 0270047 provides a process and an apparatus which provides automatically an item of footwear with vulcanized rubber sole combined with an intersole in injected or foamed material. The solution provided in D2 resides in a process wherein the sole is retained within the mold for the required vulcanization time and is then extracted and placed on a carrousel, arranged externally to a mold rotating table, where it is treated with a primer to be then inserted in a second mold mounted on each of the stations of the rotating table wherein a form is provided on which an upper is inserted. A thermoplastic material is injected into this mold, and besides producing the intersole joins the tread sole to the upper. No mention is made either to the use of any specific rubber mixture, or that such mixture can have a positive effect on the adhesion strength between rubber and polyurethane, irrespective of the particular vulcanization process adopted.

US 5,946,755 relates to shoes and a process for producing the same. Said document acknowledges it would be desired to have safety shoes endowed with the characteristics of both synthetic rubber and foamed polyurethane safety shoes. The solution provided resides in mating together an outsole part comprising a high hardness rubber material and a midsole part comprising a low hardness sponge rubber material. No mention is made to the fact that an effective adhesion between rubber and polyurethane can actually be obtained through the use of any specific rubber mixture.

### Disclosure of the Invention

The aim of the present invention is to provide a process that allows to manufacture, in a same working cycle, a sole with a vulcanized rubber tread mated with a polyurethane mid-sole.

Within this aim, an object is to provide a process that does not require idle times between the preparation of the vulcanized rubber sole and its subsequent coupling to a polyurethane mid-sole formed within a mold.

Another object is to provide a process, in which treatment of the vulcanized rubber sole is not required before injection or pouring into the polyurethane mold.

Another object is to provide products that can be suitable to perform the process.

This aim and these and other objects that will become better apparent hereinafter are achieved by a process for manufacturing a sole for shoes composed of a tread sole made of vulcanized rubber coupled to a polyurethane mid-sole, the process being defined as in claim 1.

The present invention also discloses a mold for performing the process, which has a bottom constituted by the head of a movable piston, said head having the shape and the impression of the tread sole to be obtained, a replaceable dummy last and means for the controlled heating of the bottom of the mold and of the dummy last.

The present invention also relates to the use of a mixture of vulcanizable rubber to perform the process, the use being defined as in claim 19.

### Brief description of the Drawings

Further characteristics and advantages of the invention will become better apparent from the following detailed description of a preferred embodiment of the process and of the means for performing it, also with the aid of the accompanying drawings, wherein:
Figure 1 is a schematic sectional view of a mold used to perform the process;
Figure 2 is a more detailed view of the structure of the mold and of the means for moving it, with the mold shown in the open position;
Figure 3 is a view of the assembly of Figure 2, with the mold closed in order to form the vulcanized rubber tread sole;
Figure 4 is a view of the mold and of its closure means during the step of the process related to the injection of the polyurethane.

### Ways to carrying out the Invention

The process according to the invention provides for a first step, during which a vulcanizable rubber is prepared which is obtained with a mixture composed of:
a₁) a vulcanizable nitrile rubber (NBR);
a₂) at least one hydroxyl acrylic resin;
a₃) at least one hydrocarbon resin;
a₄) at least one reinforcing filler;
a₅) at least one vulcanization accelerator.

The nitrile rubber that is used is conveniently of the medium-high nitrile type with a low Mooney value (low viscosity).

A rubber of this type is a butadiene-acrylonitrile copolymer, technically designated by the acronym NBR.

The mixture contains a hydroxyl acrylic resin, i.e., a polyacrylic resin with an OH content of less than 2.

Such resin is preferably used in a solvent and its percentage by weight is between 4 and 6% of the total weight of the mixture.

The mixture also contains a hydrocarbon resin of the family of aliphatic resins of petrochemical origin.

The hydrocarbon resin, preferably in the solid state, is present in a percentage by weight of 3 to 5% of the total weight of the mixture.

The hydrocarbon resin is a combination of hydrocarbon chains of C₅ origin.

A reinforcing filler of the siliceous type is also added to the mixture.

The reinforcing filler is preferably precipitated amorphous silica or is a mixture containing 85 to 90% SiO₂ with a BET value between 150 and 200 m²/g.

The reinforcing filler is present in a percentage by weight between 20 and 25% of the total weight of the mixture.

The vulcanization accelerator is of the mercaptan class, with the addition of an ultra-accelerator of the thiuram class.

The accelerator is introduced in the mixture in a percentage by weight between 1 and 1.5% of the total weight of the mixture.

Before continuing with the description of the process, it is useful to describe the structure of the mold that is used; this is done with reference to the two accompanying drawings.

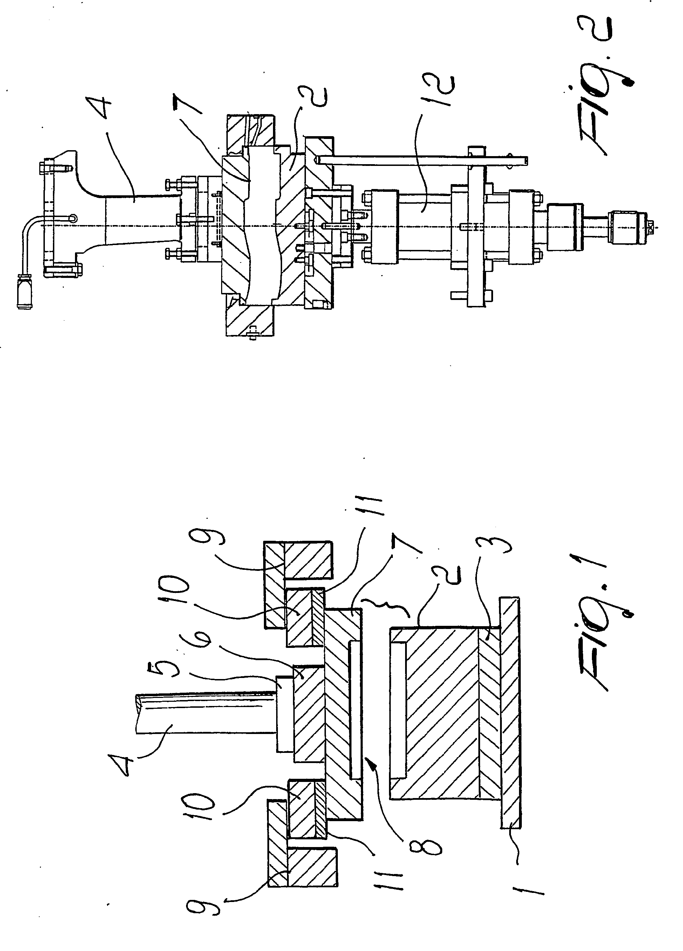

With reference to the drawings, Figure 1 is a schematic view of the mold used in the process according to the invention.

The mold is composed of a carriage plate 1, on which the part of the mold 2 that will form the sole bottom of the vulcanized rubber sole is fixed.

The mold part 2 is fixed to the carriage plate 1, with a heating plate 3 interposed.

The arm 4 of a pivot coupling for the rotation of the last is visible in an upper region.

An insulating plate 5 is present in the lower part of said arm and supports, with a heating plate 6 interposed, a dummy last 7, which is provided with a cavity 8 that matches the upper part of the vulcanized rubber sole.

Figure 1 again illustrates the ring holders 9 and the rings of the mold 10 that act on the dummy last 8 with insulation means 11 interposed.

The combination of the heating plates and of the insulating means allows to adjust independently the upper and lower temperatures of the mold.

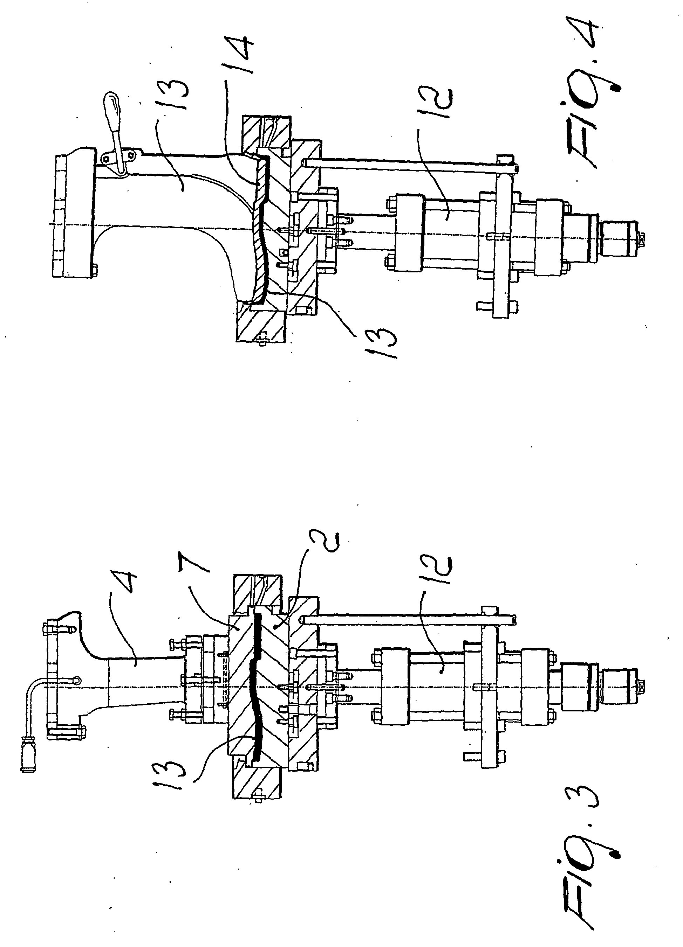

Figures 2, 3 and 4 illustrate in greater detail the structure of the mold and of its fixtures.

Figure 2 is a view of the assembly in the condition in which the mold is open, the mold being the one intended to manufacture the tread sole.

The figure clearly illustrates the presence of a piston 12, which allows to produce the translational motion of the lower part 2 of the mold.

Figure 3 illustrates the same assembly as Figure 2, in the condition in which the mold is closed during the step in which the tread sole, designated by the reference numeral 13, is provided.

In Figure 4, the dummy last 7 is replaced with a last 13, and the figure also illustrates the step of injecting and forming the polyurethane mid-sole 14.

As clearly shown, the preparation of the vulcanized rubber sole and the subsequent operation for mating with the polyurethane mid-sole occur in the same machine and with an operating cycle in which the two steps occur one after the other.

As regards the reasons for the mating between the vulcanized rubber and polyurethane, they arise from the use of a mixture that contains a hydroxyl acrylic resin.

This resin, at the end of vulcanization, on the part of the sole where the polyurethane will be deposited, retains many free bonds, which combine with the polyurethane, determining an intimate and tough coupling.

In order to allow the mixture to be usable in this process, it is necessary to use a nitrile rubber of the medium-high nitrile type and the environment in which vulcanization occurs must be acid.

It is also necessary to keep the lower part of the sole being vulcanized at a higher temperature than the upper part, and this is allowed by the particular structure of the mold and of its fixtures.

It is also important to leave the mold parts not perfectly closed, so as to form what is known as engineered flash.

This allows the optimum provision of the vulcanized rubber sole and of the polyurethane mid-sole.

From what has been described and illustrated, it is evident that the intended aim and objects have all been achieved, and that in particular a process has been devised which allows to provide a vulcanized rubber tread sole coupled to a polyurethane mid-sole with a succession of steps that can be performed with a single machine and sequentially.

Equivalent components and equivalent mold structures can of course be used starting from the same inventive concept.

This application claims priority from Italian patent No. IT 1317391.

## Claims

1. A process for manufacturing a sole for shoes composed of a tread sole (13) made of vulcanized rubber coupled to a polyurethane mid-sole (14), where:
a) for the vulcanizable rubber, a mixture is provided which is composed of:
a₁) a vulcanizable nitrile rubber (NBR);
a₄) at least one reinforcing filler;
a₅) at least one vulcanization accelerator;
b) a dosed amount of said mixture is introduced in a first cavity (8) of a mold, which is formed by a pseudocylindrical side wall and is closed in an upper region by a first replaceable dummy last (7);
c) the process waits for the duration of the vulcanization time, keeping the sole bottom piston (12) at a temperature of 100-200 °C and the dummy last (7) at a temperature of 100-200 °C, allowing their adjustment independently of each other and so that the sole bottom temperature is never lower than the temperature of the dummy last;
d) the sole bottom (2), with the tread sole (13) adhering thereto, is subjected to a translational motion, so as to generate a second cavity, and the dummy last (7) is replaced with a second dummy last or with a last with a fitted upper, closing it with the rings;
e) a dosed quantity of two-component polyurethane is injected into said second cavity;
f) the process waits for the reaction time of the polyurethane, keeping the second dummy last or the rings at a temperature of 30-80 °C; the sole is extracted and allowed to rest for the stabilization time;
the process being **characterized in that**:
- the mixture of step a) is further composed of:
a₂) at least one hydroxyl acrylic resin;
a₃) at least one hydrocarbon resin;
and **in that**
- in step b), within the pseudocylindrical side wall, a sole bottom piston (12) can perform a translational motion.

2. The process according to claim 1, **characterized in that** said nitrile rubber is of the medium-high nitrile type.

3. The process according to claims 1 and 2, **characterized in that** said nitrile rubber has a low Mooney value corresponding to a low viscosity.

4. The process according to claim 2, **characterized in that** said nitrile rubber is a butadiene-acrylonitrile copolymer commonly known by the acronym NBR.

5. The process according to claim 1, **characterized in that** said hydroxyl acrylic resin is of the family of polyacrylic resins with an OH content of less than 2.

6. The process according to claim 5, **characterized in that** said hydroxyl acrylic resin is used in a solvent.

7. The process according to claim 5, **characterized in that** said hydroxyl acrylic resin is present in a percentage by weight between 4 and 6% of the total weight of the mixture.

8. The process according to claim 1, **characterized in that** said hydrocarbon resin is of the family of aliphatic resins of petrochemical origin.

9. The process according to claim 8, **characterized in that** said hydrocarbon resin is in the solid state.

10. The process according to claim 8, **characterized in that** said hydrocarbon resin is present in a percentage by weight between 3 and 5% of the total weight of the mixture.

11. The process according to claim 8, **characterized in that** said hydrocarbon resin is a combination of hydrocarbon chains of C₅ origin.

12. The process according to claim 1, **characterized in that** said reinforcing filler is of the siliceous type.

13. The process according to claim 12, **characterized in that** said reinforcing filler is precipitated amorphous silica.

14. The process according to claim 12, **characterized in that** said reinforcing filler is a mixture containing 85 to 90% SiO₂ and with a BET value of 150 to 200 m²/g.

15. The process according to claim 12, **characterized in that** said reinforcing filler is present in a percentage by weight between 20 and 25% of the total weight of the mixture.

16. The process according to claim 1, **characterized in that** said vulcanization accelerator is of the mercaptan class.

17. The process according to claim 16, **characterized in that** said accelerator is activated by an ultra-accelerator of the thiuram class.

18. The process according to claim 16, **characterized in that** said accelerators are present in a percentage by weight between 1 and 1.5% of the total weight of the mixture.

19. Use of a vulcanizable rubber mixture to perform the process according to claim 1, where said rubber mixture is composed of:
a₁) a vulcanizable nitrile rubber (NBR);
a₄) at least one reinforcing filler;
a₅) at least one vulcanization accelerator,
the use being **characterized in that** the mixture is further composed of:
a₂) at least one hydroxyl acrylic resin;
a₃) at least one hydrocarbon resin;

20. The use of a mixture according to claim 19, **characterized in that** the vulcanizable nitrile rubber (NBR) employed is of the medium-high nitrile type.

21. The use of a vulcanizable rubber mixture according to claim 19, **characterized in that** in said mixture at least one hydroxyl acrylic resin is provided.

## Patentansprüche

1. Verfahren zur Herstellung einer Sohle für Schuhe zusammengesetzt aus einer Laufsohle (13) gebildet aus vulkanisiertem Kautschuk gekoppelt mit einer Polyurethanmittelsohle (14), wobei:
a) für den vulkanisierbaren Kautschuk eine Mischung bereitgestellt wird, die zusammengesetzt ist aus:
a₁) einem vulkanisierbaren Nitrilkautschuk (NBR);
a₄) mindestens einem Verstärkungsfüllstoff;
a₅) mindestens einem Vulkanisationsbeschleuniger;
b) eine dosierte Menge der Mischung in einen ersten Hohlraum (8) einer Form eingebracht wird, die durch eine pseudozylindrische Seitenwand gebildet ist und in einem oberen Bereich durch einen erstes austauschbares Blindstück (7) geschlossen ist;
c) das Verfahren für die Dauer der Vulkanisationszeit wartet, wobei der Sohlenunterseitenkolben (12) bei einer Temperatur von 100-200 °C gehalten wird und das Blindstück (7) bei einer Temperatur von 100-200 °C, wobei ihre Einstellung unabhängig voneinander möglich ist, so dass die Sohlenunterseitentemperatur niemals niedriger ist als die Temperatur des Blindstücks;
d) die Sohlenunterseite (2) mit der daran anhaftenden Laufsohle (13) einer Translationsbewegung ausgesetzt wird, so dass ein zweiter Hohlraum erzeugt wird und das Blindstück (7) durch ein zweites Blindstück ersetzt wird oder durch ein Stück mit einem angesetzten Oberteil, das mit Ringen verschlossen wird;
e) eine dosierte Menge von Zweikomponentenpolyurethan in den zweiten Hohlraum eingespritzt wird;
f) das Verfahren für die Reaktionsdauer des Polyurethans wartet, wobei das zweite Blindstück oder die Ringe bei einer Temperatur von 30-80 °C gehalten werden; die Sohle herausgenommen wird und über die Stabilisierungsdauer ruhen kann;
wobei das Verfahren **dadurch gekennzeichnet ist, dass**
- die Mischung von Schritt a) ferner zusammengesetzt ist aus:
a₂) mindestens einem Hydroxylacrylharz;
a₃) mindestens einem Kohlenwasserstoffharz;
und **dadurch**, dass
- in Schritt b) in der pseudozylindrischen Seitenwand ein Sohlenunterseitenkolben (12) eine Translationsbewegung ausführen kann.

2. Verfahren nach Anspruch 1, **dadurch gekennzeichnet, dass** der Nitrilkautschuk vom mittel-hoch Nitriltyp ist.

3. Verfahren nach Anspruch 1 oder 2, **dadurch gekennzeichnet, dass** der Nitrilkautschuk einen niedrigen Mooney-Wert aufweist, der einer niedrigen Viskosität entspricht.

4. Verfahren nach Anspruch 2, **dadurch gekennzeichnet, dass** der Nitrilkautschuk ein Butadien-Acrylnitril-Copolymer ist, das allgemein unter dem Akronym NBR bekannt ist.

5. Verfahren nach Anspruch 1, **dadurch gekennzeichnet, dass** das Hydroxylacrylharz aus der Familie der Polyacrylharze mit einem OH-Gehalt von weniger als 2 ist.

6. Verfahren nach Anspruch 5, **dadurch gekennzeichnet, dass** das Hydroxylacrylharz in einem Lösemittel verwendet wird.

7. Verfahren nach Anspruch 5, **dadurch gekennzeichnet, dass** das Hydroxylacrylharz in einem Gewichtsprozentanteil zwischen 4 und 6 % des Gesamtgewichts der Mischung vorhanden ist.

8. Verfahren nach Anspruch 1, **dadurch gekennzeichnet, dass** das Kohlenwasserstoffharz aus der Familie der aliphatischen Harze auf petrochemischer Basis ist.

9. Verfahren nach Anspruch 8, **dadurch gekennzeichnet, dass** das Kohlenwasserstoffharz im festen Zustand ist.

10. Verfahren nach Anspruch 8, **dadurch gekennzeichnet, dass** das Kohlenwasserstoffharz in einem Gewichtsprozentanteil zwischen 3 und 5 % des Gesamtgewichts der Mischung vorhanden ist.

11. Verfahren nach Anspruch 8, **dadurch gekennzeichnet, dass** das Kohlenwasserstoffharz eine Kombination von Kohlenwasserstoffketten auf Basis von C₅ ist.

12. Verfahren nach Anspruch 1, **dadurch gekennzeichnet, dass** der Verstärkungsfüllstoff vom Siliciumtyp ist.

13. Verfahren nach Anspruch 12, **dadurch gekennzeichnet, dass** der Verstärkungsfüllstoff amorphes Kieselhydrogel ist.

14. Verfahren nach Anspruch 12, **dadurch gekennzeichnet, dass** der Verstärkungsfüllstoff eine Mischung ist, die 85 bis 90 % SiO₂ enthält und einen BET-Wert von 150 bis 200 m²/g aufweist.

15. Verfahren nach Anspruch 12, **dadurch gekennzeichnet, dass** der Verstärkungsfüllstoff in einem Gewichtsprozentanteil zwischen 20 und 25 % des Gesamtgewichts der Mischung vorhanden ist.

16. Verfahren nach Anspruch 1, **dadurch gekennzeichnet, dass** der Vulkanisationsbeschleuniger aus der Mercaptanklasse ist.

17. Verfahren nach Anspruch 16, **dadurch gekennzeichnet, dass** der Beschleuniger durch einen Ultrabeschleuniger der Thiuramklasse aktiviert wird.

18. Verfahren nach Anspruch 16, **dadurch gekennzeichnet, dass** die Beschleuniger in einem Gewichtsprozentsatz zwischen 1 und 1,5 % des Gesamtgewichts der Mischung vorhanden sind.

19. Verwendung einer vulkanisierbaren Kautschukmischung zur Durchführung des Verfahrens nach Anspruch 1, wo die Kautschukmischung zusammengesetzt ist aus:
a₁) einem vulkanisierbaren Nitrilkautschuk (NBR);
a₄) mindestens einem Verstärkungsfüllstoff;
a₅) mindestens einem Vulkanisationsbeschleuniger, wobei die Verwendung **dadurch gekennzeichnet ist, dass** die Mischung ferner zusammengesetzt ist aus:
a₂) mindestens einem Hydroxylacrylharz;
a₃) mindestens einem Kohlenwasserstoffharz.

20. Verwendung einer Mischung nach Anspruch 19, **dadurch gekennzeichnet, dass** der eingesetzte vulkanisierbare Nitrilkautschuk (NBR) vom mittel-hoch Nitriltyp ist.

21. Verwendung einer vulkanisierbaren Kautschukmischung nach Anspruch 19, **dadurch gekennzeichnet, dass** in der Mischung mindestens ein Hydroxylacrylharz vorgesehen ist.

## Revendications

1. Procédé pour la fabrication d'une semelle de chaussure composée d'une semelle d'usure (13) réalisée en caoutchouc vulcanisé associée à une semelle intermédiaire (14) en poluyréthane, où:
a) pour le caoutchouc vulcanisé, est prévu un mélange composé de:
a₁) un caoutchouc nitrilique vulcanisable (NBR);
a₄) au moins une charge de renfort;
a₅) au moins un accélérateur de vulcanisation;
b) une quantité dosée dudit mélange est introduit dans une première cavité (8) d'un moule, qui est formé par une paroi latérale pseudo-cylindrique et est fermé dans une région supérieure par une première forme factice interchangeable (7);
c) le procédé attend pendant la durée de la vulcanisation, en maintenant le piston (12) du dessous de semelle à une température de 100-200°C et la forme factice (7) à une température de 100-200°C, permettant leur réglage indépendamment l'un de l'autre et de façon à ce que la température du dessous de semelle ne soit jamais plus basse que la température de la forme factice;
d) le dessous de semelle (2), avec la semelle d'usure (13) adhérant à celle-ci, est soumise à un mouvement translationnel, de façon à générer une deuxième cavité, et la forme factice (7) est remplacée par une deuxième forme factice ou par une forme avec une empeigne ajustée, en la fermant avec des bagues;
e) une quantité dosée de polyuréthane à deux composants est injectée dans ladite deuxième cavité;
f) le procédé attend le temps de réaction du poluyréthane, maintenant la deuxième forme factice ou les bagues à une température de 30-80°C; la semelle est extraite et laissée reposer le temps de la stabilisation;
le procédé étant **caractérisé en ce que**:
- le mélange de l'étape a) est en outre composée de:
a₂) au moins une résine d' hydroxyle acrylique;
a₃) au moins une résine d' hydrocarbure;
et **en ce que**
- dans l'étape b), à l'intérieur de la paroi latérale pseudo-cylindrique, un piston de dessous de semelle (12) peut effectuer un mouvement translationnel.

2. Procédé selon la revendication 1, **caractérisé en ce que** ledit caoutchouc nitrilique est du type nitrile moyen-haut.

3. Procédé selon les revendications 1 et 2, **caractérisé en ce que** ledit caoutchouc nitrilique présente une valeur Mooney faible correspondant à une faible viscosité.

4. Procédé selon la revendication 2, **caractérisé en ce que** ledit caoutchouc nitrilique est un copolymère butadiene-acrylonitrilique communément connu sous l'acronyme NBR.

5. Procédé selon la revendication 1, **caractérisé en ce que** ladite résine d'hydroxyle acrylique est de la famille des résines polyacryliques avec une teneur OH de moins de deux.

6. Procédé selon la revendication 5, **caractérisé en ce que** ladite résine d'hydroxyle acrylique est utilisée dans un solvant.

7. Procédé selon la revendication 5, **caractérisé en ce que** ladite résine d'hydroxyle acrylique est présente dans un pourcentage par poids compris entre 4 et 6% du poids total du mélange.

8. Procédé selon la revendication 1, **caractérisé en ce que** ladite résine d'hydrocarbure est de la famille des résines aliphatiques d'origine pétrochimique.

9. Procédé selon la revendication 8, **caractérisé en ce que** ladite résine d'hydrocarbure est à l'état solide.

10. Procédé selon la revendication 8, **caractérisé en ce que** ladite résine d'hydrocarbure est présente dans un pourcentage par poids compris entre 3 et 5 % du poids total du mélange.

11. Procédé selon la revendication 8, **caractérisé en ce que** ladite résine d'hydrocarbure est une combinaison de chaînes d'hydrocarbure d'origine C₅.

12. Procédé selon la revendication 1, **caractérisé en ce que** ladite charge de renfort est du type siliceuse.

13. Procédé selon la revendication 12, **caractérisé en ce que** ladite charge de renfort est du silice amorphe précipité.

14. Procédé selon la revendication 12, **caractérisé en ce que** ladite charge de renfort est un mélange comprenant de 85 à 90% de SiO₂ et avec une valeur BET de 150 à 200 m²/g.

15. Procédé selon la revendication 12, **caractérisé en ce que** ladite charge de renfort est présente dans un pourcentage par poids compris entre 20 et 25 % du poids total du mélange.

16. Procédé selon la revendication 1, **caractérisé en ce que** ledit accélérateur de vulcanisation est de la classe mercaptan.

17. Procédé selon la revendication 16, **caractérisé en ce que** ledit accélérateur est activé par un ultra-accélérateur de la classe thiuram.

18. Procédé selon la revendication 16, **caractérisé en ce que** lesdits accélérateurs sont présents dans un pourcentage par poids compris entre 1 et 1,5 % du poids total du mélange.

19. Utilisation d'un mélange de caoutchouc vulcanisable pour effectuer le procédé selon la revendication 1, où ledit mélange de caoutchouc est composé de:
a₁) un caoutchouc nitrilique vulcanisable (NBR);
a₄) au moins une charge de renfort;
a₅) au moins un accélérateur de vulcanisation;
l'utilisation étant **caractérisée en ce que** le mélange est en outre composé de:
a₂) au moins une résine d' hydroxyle acrylique;
a₃) au moins une résine d' hydrocarbure.

20. Utilisation du mélange selon la revendication 19, **caractérisée en ce que** le caoutchouc nitrilique vulcanisable (NBR) employé est du type nitrile moyen-haut.

21. Utilisation d'un mélange de caoutchouc vulcanisable selon la revendication 19, **caractérisée en ce que** dans ledit mélange est prévue au moins une résine d'hydroxyle acrylique.
